# EUROPÄISCHE PATENTSCHRIFT

(11) **EP 4 221 933 B1**
(45) Veröffentlichungstag und Bekanntmachung des Hinweises auf die Patenterteilung: **21.02.2024**
(21) Anmeldenummer: 22835279.5
(22) Anmeldetag: 09.12.2022
(51) Int. Cl.: B23P 19/04, B25J 9/00, B25J 21/00, B62D 65/06

(54) **ANORDNUNG ZUM APPLIZIEREN EINES DICHTUNGSPROFILS**
ARRANGEMENT FOR APPLYING A SEALING PROFILE
DISPOSITIF D'APPLICATION D'UN PROFILÉ DE JOINT D'ÉTANCHÉITÉ

(30) Priorität: 23.12.2021 EP 21217434
(43) Veröffentlichungstag der Anmeldung: 09.08.2023
(73) Patentinhaber: AyTec Automation GmbH, 93098 Mintraching (DE)
(72) Erfinder: RUHLAND, Christian, 93098 Mintraching (DE)
(74) Vertreter: Glück Kritzenberger Patentanwälte PartGmbB
(86) Internationale Anmeldenummer: PCT/EP2022/085093
(87) Internationale Veröffentlichungsnummer: WO 2023/117476

(56) Entgegenhaltungen:
- WO-A1-2011/134994
- DE-A1-102016 116 107
- DE-A1-102019 215 566
- DE-B3-102005 063 564
- DE-T2-602004 000 743
- DE-U1-202006 002 159

## Beschreibung

Die vorliegende Erfindung betrifft eine Anordnung mit einer Applizierstation zum Applizieren eines Dichtungsprofils auf eine umlaufende Dichtfläche eines Kraftfahrzeugteils, welches insbesondere eine über die Dichtfläche hinausstehende das Kraftfahrzeugteil umgrenzende Kante aufweist. Derartige Kraftfahrzeugteile sind zum Beispiel Türen, Schiebedächer oder Heckklappen, die jeweils eine von dieser umlaufenden Kante beabstandete umlaufende Dichtfläche aufweisen, mit welcher der Kraftfahrzeuginnenraum gegenüber einem Außenbereich des Kraftfahrzeugs abgedichtet wird. Derartige Kraftfahrzeugteile werden üblicherweise in einer Transporthalterung einer Fördereinrichtung der Anordnung zur Applizierstation transportiert. Die Applizierstation enthält einen Applizierroboter mit wenigstens einem Roboterarm, üblicherweise mit mehreren aneinander angelenkten Armteilen, und mit einem an dem Roboterarm angeordneten Applizierkopf zum Applizieren des Dichtungsprofils auf die Dichtfläche des Kraftfahrzeugteils. Es ist bekannt, das Kraftfahrzeugteil mittels einer Haltevorrichtung während des Applizierens des Dichtungsprofils durch den Applizierroboter zu halten, z.B. durch einen Halterahmen. Der Halterahmen mit einer Vielzahl von Halteklauen zum unbeweglichen Halten des Kraftfahrzeugteils beim Aufbringen des Dichtungsprofils ist jedoch vergleichsweise kompliziert und teuer. Eine derartige Vorrichtung ist beispielsweise aus der DE 10 2018 108 478 A bekannt.

Die WO 2011/134994 A1 zeigt eine Anordnung, bei welcher das Kraftfahrzeugteil, nämlich eine Kraftfahrzeugtür, durch eine Haltevorrichtung, z.B. einen Halteroboter gehalten wird, während ein anderer Applikationsroboter die Dichtung auf die umlaufende Dichtfläche aufbringt. Diese Anordnung hat den Nachteil, dass die Kraftfahrzeugtür, die regelmäßig durch ein Kfz-Fertigung mit einer Fördereinrichtung mittels einer Transporthalterung transportiert wird, von dem Halteroboter aus ihrer Transporthalterung entnommen werden muss, wobei sie von der Transporthalterung freizugeben ist, dann bewegt der Halteroboter die Tür in den Applikationsbereich hinein, um dort mittels des Applikationsroboters das Dichtungsprofil aufzubringen. Nach dem Applizieren muss die Tür durch den Halteroboter wieder in die Transporthalterung der Fördereinrichtung eingestellt und dort befestigt werden. Diese Schritte sind zeitaufwendig und die gesamte Vorrichtung hat aufgrund der erforderlichen Bewegungen der Türe einen recht hohen Raumbedarf.

Es ist daher Aufgabe der Erfindung, eine Anordnung der vorstehend genannten Art zu schaffen, bei der ein mittels einer Fördereinrichtung transportiertes Kraftfahrzeugteil beim Applizieren des Dichtungsprofils mit geringem Aufwand weitgehend unbeweglich gehalten wird, wodurch ein exaktes und reproduzierbares Applizieren des Dichtungsprofils möglich ist. Diese Aufgabe wird gelöst mit einer Anordnung gemäß Anspruch 1 und mit einem Verfahren gemäß Anspruch 13. Vorteilhafte Weiterbildungen der Erfindung sind Gegenstand der zugeordneten abhängigen Ansprüche. Vorteilhafte Ausführungsformen der Erfindung sind ebenfalls in den abhängigen Ansprüchen und in der Beschreibung als auch den Zeichnungen beschrieben.

Erfindungsgemäß umfasst die Anordnung zum Applizieren eines Dichtungsprofils eine Fördereinrichtung, die wenigstens eine entlang einer Transportstrecke der Fördereinrichtung verfahrbare Transporthalterung zum Halten des Kraftfahrzeugteils in der Fördereinrichtung aufweist. Die Transportstrecke führt an einer Applizierstation mit wenigstens einem Applizierroboter und mit einer Haltevorrichtung vorbei, wobei die Transporthalterung in den Wirkungsbereich der Applizierstation gelangt. So wird das Kraftfahrzeugteil der Applizierstation zugeführt. Diese weist einen Applizierroboter mit wenigstens einem bewegbaren Roboterarm und einem Applizierkopf zum Applizieren des Dichtungsprofils auf die Dichtfläche des Kraftfahrzeugteils auf. Die Haltevorrichtung der Applizierstation weist wenigstens einen Positionierroboter auf, der ausgebildet ist, das Kraftfahrzeugteil während des Applizierens in seiner Transporthalterung zu stabilisieren.

Die Erfindung hat somit den Vorteil, dass das Kraftfahrzeugteil nicht aus seiner Transporthalterung entfernt werden muss, sondern die Dichtung kann aufgebracht werden, während das Kraftfahrzeugteil in seiner Transporthalterung verbleibt. Die Applizierstation hat daher die Haltevorrichtung, die das in der Transporthalterung befindliche Kraftfahrzeugteil stabilisiert, z.B. es greift und/oder abstützt und es somit unbeweglich in der Transporthalterung stabilisiert. Das ist wichtig, weil durch den Applizierroboter beim Aufbringen des Dichtungsprofils Kräfte auf das Kraftfahrzeugteil einwirken, die zu einer leichten Lageveränderung in der Transporthalterung führen könnten, womit die Exaktheit der Aufbringung des Dichtungsprofils beeinträchtigt wäre. Andernfalls könnte man natürlich die Transporthalterung sehr massiv ausführen, um somit das Kraftfahrzeugteil beim Aufbringen unbeweglich zu halten. Dies wäre allerdings mit einem hohen Material- und Kostenaufwand verbunden. Somit realisiert die Erfindung ein schnelles Aufbringen des Dichtungsprofils, wobei das Kraftfahrzeugteil in der Transporthalterung verbleiben kann und lediglich durch die Haltevorrichtung stabilisiert wird. Das Kraftfahrzeugteil muss zum Aufbringen des Dichtungsprofil nicht aus seiner Transporthalterung entfernt werden, was den gesamten Prozess wesentlich beschleunigt und energiesparender macht.

Durch den wenigstens einen - vorzugsweise zwei - Positionierroboter kann das Kraftfahrzeugteil jetzt unkompliziert und sicher derart gehalten werden, dass es sich beim Applizieren des Dichtungsprofils nicht bewegt, was ein exaktes und reproduzierbares Aufbringen des Dichtungsprofils auf die umlaufende Dichtfläche ermöglicht.

Vorzugsweise ist dabei der wenigstens eine Positionierroboter ausgebildet, die Kante des Kraftfahrzeugteils zu greifen, was es ermöglicht, dass die Zugänglichkeit der Dichtfläche für den Applizierroboter nicht beeinträchtigt wird. Zum anderen kann an der Kante das Kraftfahrzeugteil sicher gehalten bzw. stabilisiert werden.

In einer vorteilhaften Weiterbildung der Erfindung hat die Haltevorrichtung zwei Positionierroboter, die ausgebildet sind, während des Appliziervorgangs jeweils eine Kante an einander abgewandten Seiten des Kraftfahrzeugteils zu greifen. Auf diese Weise wird die Kraftfahrzeugtüre zuverlässig sehr starr in ihrer Applizierstellung gehalten. Dies führt zu sehr guten Applikationsergebnissen.

Vorzugsweise sind die beiden Positionierroboter im selben Abstand zu der Transportstrecke angeordnet, wodurch weitgehend identische Roboter verwendet werden können und die Kraft- und Hebelverhältnisse beim Stabilisieren des Kraftfahrzeugteils in etwa gleich sind.

Vorzugsweise die Transporthalterung als Rahmenstruktur zur vertikalen, insbesondere hängenden Aufnahme des Kraftfahrzeugteils ausgebildet. Die erlaubt einen leichten Zugriff des wenigstens einen Positionierroboters, während das Kraftfahrzeugteil in der vertikalen, insbesondere hängenden Aufnahme verbleibt.

Vorzugsweise hat der wenigstens eine Positionierroboter an einem Ende seines Roboterarms einen Greifer vorzugsweise wenigstens einen Greifer, der in der Lage ist, das Kraftfahrzeugteil, insbesondere dessen Kante zu greifen, was technisch einfach zu realisieren ist.

Vorzugsweise hat dieser Greifer wenigstens einen Sensor, insbesondere einen optischen Sensor oder irgendeine andere Art von Näherungssensor, der es ermöglicht, den Greifer exakt an das Kraftfahrzeugteil heranzufahren und dieses zu greifen.

Das Halten des Kraftfahrzeugteils mittels des Greifers erfolgt vorzugsweise durch Formeingriff und/oder Friktionseingriff.

Vorzugsweise weist die Fördereinrichtung entlang ihrer Transportstrecke wenigstens eine Führung für die Transporthalterung auf, in welcher die Transporthalterung durch einen Antrieb oder manuell verfahrbar ist. Auf diese Weise ist eine einfach sukzessive Bearbeitung des Kraftfahrzeugteils in unterschiedlichen Bearbeitungsstationen möglich.

Vorzugsweise weist die Fördereinrichtung wenigstens einen Antrieb für die Bewegung der Transporthalterung in der Führung auf, womit ein weitgehend automatisierte Bearbeitung des Kraftfahrzeugteils in unterschiedlichen Bearbeitungsstationen möglich ist.

Vorzugsweise sind der Applizierroboter und der wenigstens eine Positionierroboter in einem Schutzgehäuse der Applizierstation angeordnet. Dies schützt die Anordnung vor mechanischen und vorzugsweise auch vor elektromagnetischen äußeren Beeinträchtigungen und bietet zudem den geforderten Arbeitsschutz.

Vorzugsweise ist in diesem Falle das Schutzgehäuse zur Fördereinrichtung hin offen, so dass die Zugänglichkeit des Kraftfahrzeugteils für den Applizierroboter und/oder den wenigstens einen Positionierroboter nicht eingeschränkt ist, insbesondere, wenn das Kraftfahrzeugteil beim Applizieren des Dichtungsprofils in der Fördereinrichtung bzw. in der Transporthalterung der Fördereinrichtung verbleibt.

Vorzugsweise ist der wenigstens eine Positionierroboter auf einer Drehbasis angeordnet, so dass er auf einfache Weise die erforderlichen Bewegungen zum Halten bzw. Stabilisieren des Kraftfahrzeugteils und die Bewegungen des Kraftfahrzeugteils relativ zur Fördereinrichtung, wenn notwendig, vornehmen kann.

In diesem Fall weist der wenigstens eine Positionierroboter vorzugsweise wenigstens einen wenigstens zweiteiligen Arm auf, der an der Drehbasis schwenkbar gelagert ist, wobei am freien Ende des Armes ein Greifer mit mehreren Freiheitsgraden beweglich angeordnet ist und die beiden Teile des Armes relativ zueinander schwenkbar sind. Dies ermöglicht mit einem geringen technischen Aufwand eine hohe Beweglichkeit des Greifers zum Ausführen aller erforderlichen Halte- und Transportaufgaben, um das Kraftfahrzeugteil vor dem Applizierroboter zu positionieren und/oder zu halten und/oder zu stabilisieren.

Die Erfindung betrifft auch ein Verfahren zum Applizieren eines Dichtungsprofils auf einem Kraftfahrzeugteil, welches eine umlaufende Dichtfläche und insbesondere eine über die Dichtfläche hinausstehenden Kante aufweist. Das Kraftfahrzeugteil wird hierbei in einer Transporthalterung einer Fördereinrichtung entlang einer Transportstrecke transportiert, die an einer Applizierstation vorbei führt, welche einen Applizierroboter mit wenigstens einem bewegbaren Roboterarm und einem Applizierkopf zum Aufbringen des Dichtungsprofils auf die Dichtfläche des Kraftfahrzeugteils und eine Haltevorrichtung verwendet, um das Kraftfahrzeugteil beim Aufbringen des Dichtungsprofils auf die Dichtfläche in der Transporthalterung zu stabilisieren, wobei als Haltevorrichtung wenigstens ein Positionierroboter verwendet wird. Das erfindungsgemäße Verfahren erlaubt es, wie die eingangs beschriebene erfindungsgemäße Anordnung, die Dichtfläche aud das Kraftfahrzeugteil aufzubringen, während es in der Transporthalterung verbleibt, was möglich ist, da die Position des Kraftfahrzeugteils in der Transporthalterung beim Aufbringen des Dichtungsprofils zusätzlich durch den wenigstens einen Positionierroboter stabilisiert wird. Wegen der weiteren Vorteile und Charakteristika des erfindungsgemäßen Verfahrens wird auf die Charakteristika und Vorteile der oben beschriebenen erfindungsgemäßen Anordnung verwiesen.

Vorzugsweise greift der Positionierroboter beim Applizieren die Kante des Kraftfahrzeugteils mit einem Greifer, was eine sehr gute Stabilisierung der Lage des Kraftfahrzeugteils mit wenig Aufwand ermöglicht. Er behindert damit nicht den Zugang des Applizierroboters zur Dichtfläche zum Applizieren des Dichtungsprofils.

Vorzugsweise verbleibt das Kraftfahrzeugteil während des Applizierens in der Transporthalterung der Fördereinrichtung und die Transporthalterung verbleibt vorzugsweise in einer Führung der Fördereinrichtung, so dass auch die Transporthalterung beim Applizieren nicht aus der Fördereinrichtung entfernt werden muss.

Vorzugsweise werden zwei Positionierroboter verwendet, um das das in der Transporthalterung befindliche Kraftfahrzeugteil beim Aufbringen des Dichtungsprofils an zwei einander abgewandten Seiten zu halten. Dies bietet eine sehr gute Stabilisierung des Kraftfahrzeugteils während des Applizierens des Dichtungsprofils, und die Einbringung von Biegekräften in das Kraftfahrzeugteil während des Applizierens durch den Applizierroboter wird minimiert. Das Kraftfahrzeugteil wird somit beim Applizieren weitgehend kräftefrei und unbeweglich gehalten.

Folgende Ausdrücke werden synonym verwendet: Positionierroboter - Stabilisierungsroboter - Halteroboter; stabilisieren - das Kraftfahrzeugteil in der Applizierstellung weitgehend unbeweglich halten; Applizieren - Aufbringen; Transporthalterung - Gehänge; Kraftfahrzeugteil - Kraftfahrzeugtür - Tür; Applizieranordnung - Appliziervorrichtung; drehbare Basis - Drehbasis; Positionierroboter - Halteroboter - Abstützroboter;
Es ist für den Fachmann offensichtlich, dass die obigen Ausführungsformen der Erfindung, und zwar verfahrenstechnischer als auch vorrichtungstechnischer Art, beliebig miteinander kombiniert werden können.

Die Erfindung wird nachfolgend beispielsweise anhand der schematischen Zeichnung beschrieben. Hierin zeigen:
- Fig. 1: eine perspektivische Darstellung einer Anordnung zum Aufbringen eines Dichtungsprofil auf die umlaufende Dichtfläche einer Kraftfahrzeugtür mit einer Applizierstation umfassend einen Applizierroboter und zwei Positionierrobotern zum Stabilisieren der Kraftfahrzeugtür in einer Transporthalterung einer Fördereinrichtung während des Applizierens eines Dichtungsprofils,
- Fig.2: eine perspektivische Darstellung der Fördereinrichtung, der Transporthalterung und der beiden Positionierroboter aus Fig. 1, und
- Fig. 3: eine Seitenansicht der Fördereinrichtung, der Transporthalterung und der beiden Positionierroboter aus Fig. 1.

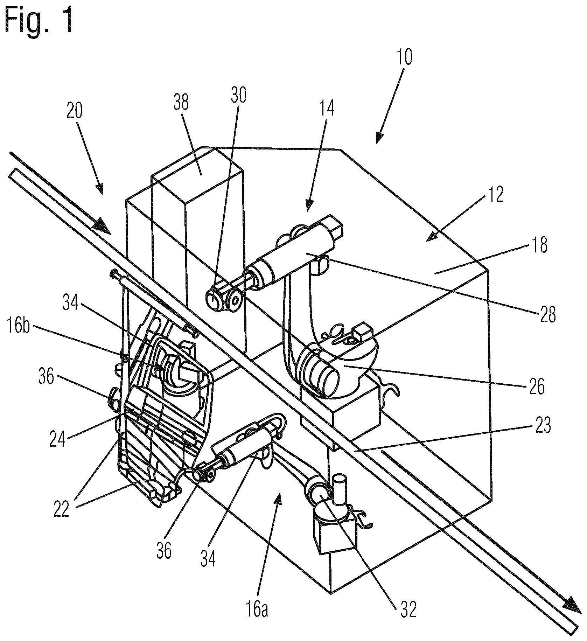

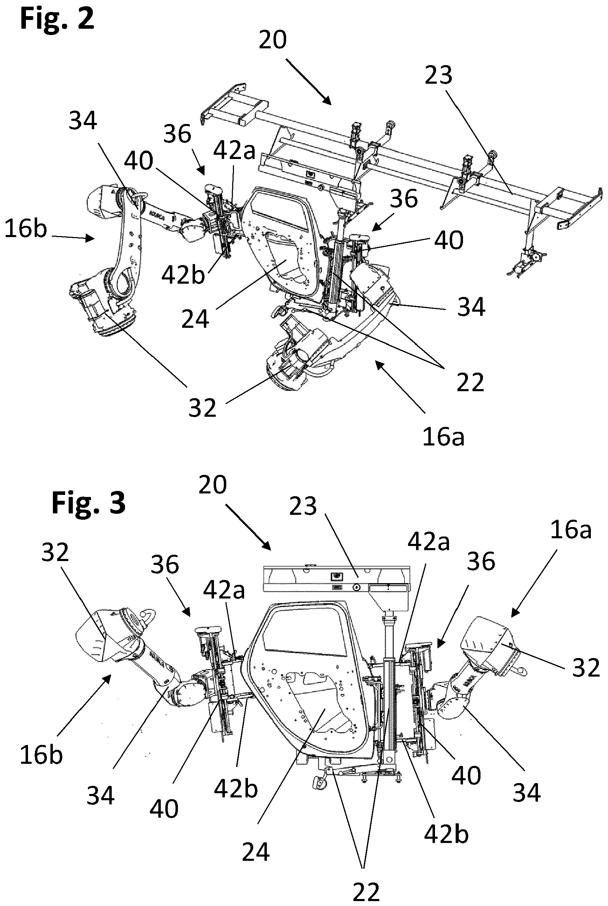

Fig. 1 zeigt eine Applizieranordnung 10 zum Applizieren eines Dichtungsprofils auf eine umlaufende Dichtfläche eines Kraftfahrzeugteils 24, in diesem Beispiel einer Kraftfahrzeugtür. Die Applizieranordnung 10 umfasst eine Applizierstation 12 mit einem Applizierroboter 14 und zwei Positionierrobotern 16a, 16b, die in einem Schutzgehäuse 18 angeordnet sind. Das Schutzgehäuse 18 ist in Richtung auf eine Fördereinrichtung 20 offen, welche die Kraftfahrzeugtüren 24 jeweils mittels einer in einer Führung 23 der Fördereinrichtung 20 verfahrbaren Transporthalterung 22 hängend an der Applizierstation 12 vorbei fördert, wobei die Kraftfahrzeugtür 24 in den Zugriffsbereich des Applizierroboters 14 und der Positionierroboter 16a, 16b gelangt. Die Fördereinrichtung 20 ist hier vereinfacht nur durch Pfeile dargestellt, und ist in ihren variablen Ausführungsarten als solche bekannt. Etwas genauer ist die Fördereinrichtung 20 mit ihrer Führung 23 in den Figuren 2 und 3 dargestellt. Mittels der Transporthalterung 22, auch Gehänge genannt, hängt die Kraftfahrzeugtür 24 sicher während des Transports an der Fördereinrichtung 20. Um die Kraftfahrzeugtür 24 während des Applizierens des Dichtungsprofils, was mit einer Krafteinwirkung auf die Kraftfahrzeugtür 24 verbunden ist, fest und unbeweglich zu halten, werden die beiden Positionierroboter 16a, 16b verwendet. Es ist somit nicht notwendig, dass die Positionierroboter 16a, 16b die Kraftfahrzeugtür 24 auch aus der Transporthalterung 22 entnehmen oder zusammen mit der Transporthalterung 22 aus der Fördereinrichtung 20 entnehmen, um sie in eine Applizierstellung zu bewegen.. Somit verbleibt bei der Applizieranordnung 10 die Kraftfahrzeugtür 24 beim Applizieren des Dichtungsprofils durch den Applizierroboter 14 in der Fördereinrichtung 20 als auch in ihrer Transporthalterung 22. Die Kraftfahrzeugtür 24 wird somit durch die Positionierroboter 16a, 16b in ihrer Applizierstellung nur stabilisiert, d.h. weitgehend unbeweglich gehalten. Die Positionierroboter 16a, 16b können daher kleiner dimensioniert und auf die alleinige Aufgabe optimiert werden, die Kraftfahrzeugtür 24 zu stabilisieren, z.B. abzustützen oder zu greifen. Dies ist apparatetechnisch sehr viel einfacher und kostengünstiger zu realisieren, als wenn die Positionierroboter 16a, 16b Transportfunktionalität aufweisen müssten.

Der Applizierroboter 14 hat vorzugsweise eine um eine horizontale Achse schwenkbare Basis 26, an welcher vorzugsweise ein zweiteiliger Arm 28 schwenkbar gehalten ist, dessen beiden Teile relativ zueinander verschwenkbar sind. Am Ende des Arms 28 ist ein multi-beweglicher Applizierkopf 30 angeordnet, der durch entsprechende Ansteuerung des Applizierroboters 14 in der Lage ist, die Dichtungsfläche der Kraftfahrzeugtür 24 entlangzufahren und dabei das Dichtungsprofil auf diese aufzubringen.

Jeder Positionierroboter 16a, 16b enthält wie der Applizierroboter 14 vorzugsweise eine um eine vertikale Achse rotierbare Basis 32, an welcher ein zweiteiliger Arm 34 schwenkbar gelagert ist, an dessen Ende ein Greifer 36 angeordnet ist, der in der Lage ist, die Kraftfahrzeugtür 24 beim Applizieren des Dichtungsprofils zu halten. Vorzugsweise kann der Greifer 36 die Kante der Kraftfahrzeugtür 24 halten, was eine sichere Stabilisierung der Kraftfahrzeugtür 24 beim Applizieren ermöglicht, ohne den Zugriff des Applizierroboters 14 auf die Dichtfläche zu beeinträchtigen. Der Abstand der Positionierroboter 16a, 16b von der Führung 23 ist vorzugsweise in etwa identisch, wodurch die Kraftverhältnisse beim Stabilisieren der Kraftfahrzeugtür für beide Positionierroboter 16a, 16b in etwa gleich ist, womit identische Positionierroboter 16a, 16b verwendet werden können.

Die Applizieranordnung 10 hat eine Steuerung 38, welche die Tätigkeit der Fördereinrichtung 20 im Bereich der Applizierstation 12 als auch den Applizierroboter 14 und die beiden Positionierroboter 16a, 16b steuert, um ein exaktes reproduzierbares Applizieren des Dichtungsprofils auf der Kraftfahrzeugtür 24 sicherzustellen. Die Bewegung der Transporthalterung 22 in der Fördereinrichtung 20 wird dabei nach Erreichen ihrer Applizierstellung im Zugriffsbereich des Applizierroboters 14 und der beiden Positionierroboter 16a, 16b gestoppt und nach dem Applizieren wieder in Bewegung gesetzt, um die nächste mit einer Kraftfahrzeugtür 24 bestückte Transporthalterung 22 zu empfangen. Die Transporthalterungen 22 sind in der Fördereinrichtung 20 deshalb vorzugsweise durch die Steuerung 38 individuell bewegbar und stoppbar.

Die Figuren 2 und 3 zeigen die Fördereinrichtung 20 mit der Führung 23 etwas detaillierter. Die Greifer 36 enthalten jeweils eine Schiene 40, an der zwei Greifklauen 42a, 42b relativ zueinander verfahrbar und somit in ihrem Abstand variabel gehalten sind. Jede der Greifklauen 42a, 42b umgreift die Kraftfahrzeugtür 24 vorzugsweise an einer Kante. Somit wird die Türe beim Aufbringen des Dichtungsprofils zum einen durch die Transporthalterung 22 gehalten und zum anderen durch die vier Greifklauen 42a, 42b der beiden Greifer 36 der beiden Positionierroboter 16a, 16b. Sie verändert daher beim Aufbringen des Dichtungsprofils nicht ihre Lage womit ein exaktes Aufbringen des Dichtungsprofils sichergestellt wird.

Die Erfindung ist nicht auf die beschriebenen Ausführungsbeispiele beschränkt, sondern kann innerhalb des Schutzbereichs der beiliegenden Ansprüche variiert werden.

### Bezugszeichenliste:

- 10: Applizieranordnung -Appliziervorrichtung
- 12: Applizierstation
- 14: Applizierroboter
- 16a,b: Positionierroboter - Halteroboter
- 18: zur Fördereinrichtung hin offenes Schutzgehäuse der Applizierstation, vorzugsweise elektromagnetisch abgeschirmt
- 20: Fördereinrichtung mit individuell steuerbaren Transporthalterungen
- 22: Transporthalterung der Fördereinrichtung
- 23: Führung der Fördereinrichtung für die Transporthalterung entlang einer Transportstrecke
- 24: Kraftfahrzeugteil - Kraftfahrzeugtür
- 26: drehbare Basis des Applizierroboters
- 28: zweiteiliger Arm des Applizierroboters
- 30: Applizierkopf des Applizierroboters
- 32: drehbare Basis des Positionierroboters
- 34: zweiteiliger Arm des Positionierroboters
- 36: Greifer des Positionierroboters
- 38: Steuerung für die Applizierstation und die Fördereinrichtung im Bereich der Applizierstation
- 40: Schiene des Greifers für zwei Greifklauen
- 42a,b: zwei an der Schiene des Greifers relativ zueinander verstellbare Greifklauen

## Patentansprüche

1. Anordnung zum Applizieren eines Dichtungsprofils auf einem Kraftfahrzeugteil (24), welches eine umlaufende Dichtfläche und insbesondere eine über die Dichtfläche hinausstehenden Kante aufweist,
umfassend eine Fördereinrichtung (20), die wenigstens eine entlang einer Transportstrecke der Fördereinrichtung (20) verfahrbare Transporthalterung (22) zum Halten des Kraftfahrzeugteils (24) in der Fördereinrichtung aufweist, welche Transportstrecke an einer Applizierstation (12) mit wenigstens einem Applizierroboter (40) und mit einer Haltevorrichtung (16a, 16b) vorbei führt, wobei die Transporthalterung (22) in den Wirkungsbereich der Applizierstation (12) gelangt und ausgebildet ist, das Kraftfahrzeugteil (24) während des Auftragens des Dichtungsprofils zu halten, wobei der Applizierroboter (40) wenigstens einen bewegbaren Roboterarm (28) und einen Applizierkopf (30) zum Applizieren des Dichtungsprofils auf die Dichtfläche des Kraftfahrzeugteils (24) aufweist, und wobei die Haltevorrichtung (16a, 16b) wenigstens einen Positionierroboter (16a, 16b) umfasst, der ausgebildet ist, die Position des Kraftfahrzeugteils (24) während des Applizierens in der Transporthalterung (22) zu stabilisieren.

2. Anordnung nach Anspruch 1,
**dadurch gekennzeichnet, dass** die Haltevorrichtung zwei Positionierroboter (16a, 16b) aufweist, die ausgebildet sind, während des Appliziervorgangs jeweils eine Kante an einander abgewandten Seiten des in der Transporthalterung (22) befindlichen Kraftfahrzeugteils (24) zu greifen.

3. Anordnung nach Anspruch 2, **dadurch gekennzeichnet, dass** die beiden Positionierroboter (16a, 16b) im selben Abstand zu der Transportstrecke angeordnet sind.

4. Anordnung nach einem der vorhergehenden Ansprüche, **dadurch gekennzeichnet, dass** die Transporthalterung (22) als Rahmenstruktur zur hängenden Aufnahme des Kraftfahrzeugteils (24) ausgebildet ist.

5. Anordnung nach einem der vorhergehenden Ansprüche, **dadurch gekennzeichnet, dass** der Applizierroboter (14) und der wenigstens eine Positionierroboter (16a, 16b) in einem Schutzgehäuse (18) der Applizierstation (12) angeordnet sind.

6. Anordnung nach Anspruch 5, **dadurch gekennzeichnet, dass** das Schutzgehäuse (18) zur Fördereinrichtung (20) hin offen ist.

7. Anordnung nach einem der vorhergehenden Ansprüche, **dadurch gekennzeichnet, dass** der wenigstens eine Positionierroboter (16a, 16b) eine drehbare Basis (32) aufweist.

8. Anordnung nach Anspruch 7, **dadurch gekennzeichnet, dass** der wenigstens eine Positionierroboter (16a, 16b) einen wenigstens zweiteiligen Arm (34) aufweist, der auf der drehbaren Basis (32) schwenkbar gelagert ist, wobei am freien Ende des Armes (34) ein Greifer (36) mit mehreren Freiheitsgraden beweglich angeordnet ist und die beiden Teile des Armes (34) relativ zueinander schwenkbar sind.

9. Anordnung nach einem der vorhergehenden Ansprüche, **dadurch gekennzeichnet, dass** der wenigstens eine Positionierroboter (16a, 16b) an einem Ende seines Roboterarms einen Greifer aufweist, der ausgebildet ist, die Kante des Kraftfahrzeugteils (24) zu greifen.

10. Anordnung nach Anspruch 9, **dadurch gekennzeichnet, dass** der Greifer mit einem Sensor, z. B. einem optischen Sensor versehen ist.

11. Anordnung nach einem der vorhergehenden Ansprüche, **dadurch gekennzeichnet, dass** die Fördereinrichtung (20) entlang ihrer Transportstrecke wenigstens eine Führung (23) für die Transporthalterung (22) aufweist.

12. Anordnung nach Anspruch 11, **dadurch gekennzeichnet, dass** die Fördereinrichtung (20) wenigstens einen Antrieb für die Bewegung der Transporthalterung in der Führung (23) aufweist.

13. Verfahren zum Applizieren eines Dichtungsprofils auf einem Kraftfahrzeugteil (24), welches eine umlaufende Dichtfläche und insbesondere eine über die Dichtfläche hinausstehenden Kante aufweist, welches Kraftfahrzeugteil (24) in einer Transporthalterung (22) einer Fördereinrichtung (20) entlang einer Transportstrecke transportiert wird, die an einer Applizierstation (12) vorbei führt, in welcher das Dichtungsprofil auf das Kraftfahrzeugteil (24) aufgebracht wird, während es in seiner Transporthalterung verbleibt, wobei die Applizierstation einen Applizierroboter (14) mit wenigstens einem bewegbaren Roboterarm (28) und einem Applizierkopf (30) zum Aufbringen des Dichtungsprofils auf die Dichtfläche des Kraftfahrzeugteils (24) und eine Haltevorrichtung (16a, 16b) verwendet, um das Kraftfahrzeugteil (24) beim Aufbringen des Dichtungsprofils auf die Dichtfläche in der Transporthalterung (22) zu stabilisieren, wobei als Haltevorrichtung wenigstens ein Positionierroboter (16a, 16b) verwendet wird.

14. Verfahren nach Anspruch 13, **dadurch gekennzeichnet, dass** der Positionierroboter (16a, 16b) beim Applizieren die Kante des Kraftfahrzeugteils (24) mit einem Greifer (36) greift.

15. Verfahren nach Anspruch 13 oder 14, **dadurch gekennzeichnet, dass** das Kraftfahrzeugteil (24) während des Applizierens in der Transporthalterung (22) der Fördereinrichtung (20) verbleibt und die Transporthalterung in einer Führung (23) der Fördereinrichtung (20) verbleibt.

16. Verfahren nach einem der Ansprüche 13 bis 15, **dadurch gekennzeichnet, dass** zwei Positionierroboter (16a, 16b) verwendet werden, um das in der Transporthalterung (22) befindliche Kraftfahrzeugteil (24) beim Aufbringen des Dichtungsprofils an zwei einander abgewandten Seiten greifen, während insbesondere das Kraftfahrzeugteil (24) durch die Transporthalterung (22) oben und unten gehalten wird.

## Claims

1. Arrangement for applying a sealing profile to a motor vehicle part (24), which has a circumferential sealing surface and, in particular, an edge projecting beyond the sealing surface
comprising a conveyor device (20) which has at least one transport holder (22), which can be moved along a transport path of the conveyor device (20), for holding the motor vehicle part (24) in the conveyor device, which transport path leads past an application station (12) having at least one application robot (40) and having a holding device (16a, 16b), the transport holder (22) coming into the radius of action of the application station (12) and being designed to hold the motor vehicle part (24) during application of the sealing profile, wherein the application robot (40) has at least one movable robot arm (28) and an application head (30) for applying the sealing profile to the sealing surface of the motor vehicle part (24), and wherein the holding device (16a, 16b) comprises at least one positioning robot (16a, 16b) which is designed to stabilize the position of the motor vehicle part (24) during application in the transport holder (22).

2. Arrangement according to claim 1,
**characterized in that** the holding device has two positioning robots (16a, 16b) which are each designed to grip an edge on mutually remote sides of the motor vehicle part (24) located in the transport holder (22) during the application operation.

3. Arrangement according to claim 2, **characterized in that** the two positioning robots (16a, 16b) are arranged at the same distance from the transport path.

4. Arrangement according to one of the preceding claims, **characterized in that** the transport support (22) is designed as a frame structure for suspended reception of the motor vehicle part (24).

5. Arrangement according to one of the preceding claims, **characterized in that** the application robot (14) and the at least one positioning robot (16a, 16b) are arranged in a protective housing (18) of the application station (12).

6. Arrangement according to claim 5, **characterized in that** the protective housing (18) is open towards the conveyor device (20).

7. Arrangement according to any one of the preceding claims, **characterized in that** the at least one positioning robot (16a, 16b) has a rotatable base (32).

8. Arrangement according to claim 7, **characterized in that** the at least one positioning robot (16a, 16b) has an at least two-part arm (34) which is pivotably mounted on the rotatable base (32), a gripper (36) having a plurality of degrees of freedom being movably arranged at the free end of the arm (34), and the two parts of the arm (34) being pivotable relative to one another.

9. Arrangement according to one of the preceding claims, **characterized in that** the at least one positioning robot (16a, 16b) has, at one end of its robot arm, a gripper which is designed to grip the edge of the motor vehicle part (24).

10. Arrangement according to claim 9, **characterized in that** the gripper is provided with a sensor, for example an optical sensor.

11. Arrangement according to one of the preceding claims, **characterized in that** the conveyor device (20) has at least one guide (23) for the transport holder (22) along its transport path.

12. Arrangement according to claim 11, **characterized in that** the conveyor device (20) has at least one drive for moving the transport holder in the guide (23).

13. Method for applying a sealing profile to a motor vehicle part (24) which has a circumferential sealing surface and, in particular, an edge projecting beyond the sealing surface, which motor vehicle part (24) is transported in a transport holder (22) of a conveyor device (20) along a transport path which leads past an application station (12) in which the sealing profile is applied to the motor vehicle part (24) while it remains in its transport holder, wherein the application station uses an application robot (14) with at least one movable robot arm (28) and an application head (30) for applying the sealing profile to the sealing surface of the motor vehicle part (24) and a holding device (16a, 16b) for stabilizing the motor vehicle part (24) in the transport holder (22) during application of the sealing profile to the sealing surface, wherein at least one positioning robot (16a, 16b) is used as the holding device.

14. Method according to claim 13, **characterized in that** the positioning robot (16a, 16b) grips the edge of the motor vehicle part (24) with a gripper (36) during application.

15. Method according to claim 13 or 14, **characterized in that** the motor vehicle part (24) remains in the transport holder (22) of the conveyor device (20) during the application and the transport holder remains in a guide (23) of the conveyor device (20).

16. Method according to any one of claims 13 to 15, **characterized in that** two positioning robots (16a, 16b) are used to grip the motor vehicle part (24) located in the transport holder (22) on two sides facing away from each other during application of the sealing profile, while in particular the motor vehicle part (24) is held up and down by the transport holder (22).

## Revendications

1. Agencement d'application d'un profilé d'étanchéité sur un élément de véhicule automobile (24), qui présente une surface d'étanchéité périphérique et en particulier un bord dépassant de la surface d'étanchéité,
comprenant un moyen de transport (20) qui présente au moins un support de transport (22) déplaçable le long d'un trajet de transport du moyen de transport (20) pour maintenir l'élément de véhicule automobile (24) dans le moyen de transport, lequel trajet de transport passe devant un poste d'application (12) comportant au moins un robot d'application (40) et un dispositif de maintien (16a, 16b), le support de transport (22) arrivant dans la zone d'action du poste d'application (12) et étant conçu pour maintenir l'élément de véhicule automobile (24) pendant l'application du profilé d'étanchéité, le robot d'application (40) présentant au moins un bras robotisé mobile (28) et une tête d'application (30) pour appliquer le profilé d'étanchéité sur la surface d'étanchéité de l'élément de véhicule automobile (24), et le dispositif de maintien (16a, 16b) comprenant au moins un robot de positionnement (16a, 16b) conçu pour stabiliser la position de l'élément de véhicule automobile (24) dans le support de transport (22) pendant l'application.

2. Agencement selon la revendication 1,
**caractérisé en ce que** le dispositif de maintien présente deux robots de positionnement (16a, 16b) qui sont conçus chacun pour saisir un bord sur des côtés opposés de l'élément de véhicule automobile (24) se trouvant dans le support de transport (22) pendant l'opération d'application.

3. Agencement selon la revendication 2,
**caractérisé en ce que** les deux robots de positionnement (16a, 16b) sont disposés à la même distance du trajet de transport.

4. Agencement selon l'une des revendications précédentes,
**caractérisé en ce que** le support de transport (22) est conçu comme une structure de cadre destinée à recevoir de manière suspendue l'élément de véhicule automobile (24).

5. Agencement selon l'une des revendications précédentes,
**caractérisé en ce que** le robot d'application (14) et ledit au moins un robot de positionnement (16a, 16b) sont disposés dans un boîtier de protection (18) du poste d'application (12).

6. Agencement selon la revendication 5,
**caractérisé en ce que** le boîtier de protection (18) est ouvert vers le moyen de transport (20).

7. Agencement selon l'une des revendications précédentes,
**caractérisé en ce que** ledit au moins un robot de positionnement (16a, 16b) présente une base rotative (32).

8. Agencement selon la revendication 7,
**caractérisé en ce que** ledit au moins un robot de positionnement (16a, 16b) présente un bras (34) au moins en deux parties qui est monté pivotant sur la base rotative (32), un préhenseur (36) à plusieurs degrés de liberté étant monté mobile à l'extrémité libre du bras (34) et les deux parties du bras (34) pouvant pivoter l'une par rapport à l'autre.

9. Agencement selon l'une des revendications précédentes,
**caractérisé en ce que** ledit au moins un robot de positionnement (16a, 16b) présente, à une extrémité de son bras robotisé, un préhenseur conçu pour saisir le bord de la pièce (24) de l'élément de véhicule automobile (24).

10. Agencement selon la revendication 9,
**caractérisé en ce que** le préhenseur est muni d'un capteur, par exemple un capteur optique.

11. Agencement selon l'une des revendications précédentes,
**caractérisé en ce que** le moyen de transport (20) présente, le long de son trajet de transport, au moins un guide (23) pour le support de transport (22).

12. Agencement selon la revendication 11,
**caractérisé en ce que** le moyen de transport (20) présente au moins un entraînement pour le déplacement du support de transport dans le guide (23).

13. Procédé d'application d'un profilé d'étanchéité sur un élément de véhicule automobile (24), qui présente une surface d'étanchéité périphérique et en particulier un bord dépassant de la surface d'étanchéité, lequel élément de véhicule automobile (24) est transporté dans un support de transport (22) d'un moyen de transport (20) le long d'un trajet de transport qui passe devant un poste d'application (12) dans lequel le profilé d'étanchéité est appliqué sur l'élément de véhicule automobile (24) tandis qu'il reste dans son support de transport, le poste d'application utilisant un robot d'application (14) comportant au moins un bras de robot mobile (28) et une tête d'application (30) pour appliquer le profilé d'étanchéité sur la surface d'étanchéité de l'élément de véhicule automobile (24) ainsi qu'un dispositif de maintien (16a, 16b) pour stabiliser l'élément de véhicule automobile (24) dans le support de transport (22) lors de l'application du profilé d'étanchéité sur la surface d'étanchéité, au moins un robot de positionnement (16a, 16b) étant utilisé comme dispositif de maintien.

14. Procédé selon la revendication 13,
**caractérisé en ce que**, lors de l'application, le robot de positionnement (16a, 16b) saisit le bord de l'élément de véhicule automobile (24) avec un préhenseur (36).

15. Procédé selon la revendication 13 ou 14,
**caractérisé en ce que** l'élément de véhicule automobile (24) reste dans le support de transport (22) du moyen de transport (20) pendant l'application et le support de transport reste dans un guide (23) du moyen de transport (20).

16. Procédé selon l'une des revendications 13 à 15,
**caractérisé en ce que** deux robots de positionnement (16a, 16b) sont utilisés pour saisir l'élément de véhicule automobile (24) se trouvant dans le support de transport (22) sur deux côtés opposés lors de l'application du profilé d'étanchéité, tandis que l'élément de véhicule automobile (24) est en particulier maintenu en haut et en bas par le support de transport (22).
